(19) Europäisches Patentamt
European Patent Office
Office européen des brevets

(11) **EP 0 566 452 B1**

(12) **FASCICULE DE BREVET EUROPEEN**

(45) Date de publication et mention
de la délivrance du brevet:
**31.01.1996 Bulletin 1996/05**

(51) Int. Cl.$^6$: **B64C 27/82**, G05D 1/08,
B64C 13/16

(21) Numéro de dépôt: **93400909.3**

(22) Date de dépôt: **07.04.1993**

(54) **Hélicoptère monorotor à système anticouple mixte et procédé pour contrecarrer le couple induit par ce monorotor**

Einrotoriger Hubschrauber mit gemischtem Gegenwirkmomentsystem und Verfahren dem Drehmoment dieses Roters entgegenzuwirken

Single-rotor helicopter with mixed counter-torque system and method to counter the torque induced by this single rotor

(84) Etats contractants désignés:
**DE GB IT**

(30) Priorité: **14.04.1992 FR 9204566**

(43) Date de publication de la demande:
**20.10.1993 Bulletin 1993/42**

(73) Titulaire: **EUROCOPTER FRANCE, Société Anonyme dite:**
**F-13725 Marignane Cédex (FR)**

(72) Inventeurs:
• **Rollet, Philippe Alain**
**F-13880 Velaux (FR)**
• **Eglin, Paul Gérhard**
**F-13100 Aix en Provence (FR)**

(74) Mandataire: **Bonnetat, Christian**
**F-75008 Paris (FR)**

(56) Documents cités:
DE-B- 1 144 116          FR-A- 2 167 249
FR-A- 2 338 845          US-A- 2 581 396

**Description**

La présente invention concerne les hélicoptères comportant un seul rotor principal d'avance et de sustentation et un dispositif anticouple mixte comprenant un rotor anticouple associé à au moins une surface aérodynamique braquable de direction, telle qu'un volet de dérive ou une dérive entièrement braquable. Elle concerne également un procédé pour contrecarrer de façon optimale le couple induit par ledit rotor principal sur l'hélicoptère. Cette invention, quoique non exclusivement, s'applique tout particulièrement aux hélicoptères dont le rotor anticouple est de type caréné.

On sait que, dans un hélicoptère pourvu d'un unique rotor principal d'avance et de sustentation, le fuselage a tendance, en réaction au couple exercé par ledit rotor principal, à tourner dans le sens opposé au sens de rotation de ce dernier. On sait de plus que, pour combattre le couple de réaction auquel est soumis le fuselage, il est usuel de prévoir un rotor auxiliaire anticouple, susceptible d'engendrer une poussée transversale et entraîné en rotation à partir de la source motrice du rotor principal. Ainsi, le rotor auxiliaire anticouple prélève une partie de la puissance de cette source motrice.

Il en résulte donc que, pour les performances de l'hélicoptère, il est avantageux que le rotor auxiliaire anticouple soit aidé dans sa fonction de stabilisation latérale anticouple du fuselage.

Comme cela est par exemple indiqué dans le brevet US-A-2 818 224, on peut, à cet effet, délester ledit rotor anticouple, en vol de translation, à l'aide d'une poussée aérodynamique s'exerçant sur une dérive prévue à l'arrière dudit hélicoptère. Une telle poussée est habituellement obtenue en choisissant pour la dérive un profil cambré et en calant celle-ci avec un certain angle par rapport au plan de symétrie du fuselage. Cependant, pour une définition de dérive fixée, la poussée ainsi obtenue lorsque l'hélicoptère vole à dérapage nul ne dépend que de la pression dynamique de l'air sur la dérive et n'est donc pas modulable. L'effort anticouple à exercer variant de façon différente en fonction de la vitesse, ainsi qu'en fonction d'autres paramètres de vol, il en résulte que le délestage optimum du rotor anticouple n'est en pratique possible que dans un seul cas de vol. On retient habituellement le vol de croisière en palier, par exemple à la vitesse économique de croisière, comme point d'optimisation ; le calage de la dérive est alors choisi pour que la poussée exercée par celle-ci déleste en majeure partie, ou en totalité, le rotor anticouple à la vitesse de croisière choisie. Dès que les conditions de vol (vitesse horizontale, vitesse verticale) ou la configuration appareil (masse, emports externes) viennent à changer, le réglage initial de la dérive n'est plus optimal et une certaine perte de performance apparaît. De plus, en vol de descente en autorotation, la poussée de la dérive est alors superflue (le couple rotor principal à contrer est quasi-nul) et doit être équilibré par une poussée négative fournie par le rotor anticouple. Cette poussée négative est pénalisante en performance et réduit de façon significative la plage de commande restant disponible pour le contrôle en lacet de l'hélicoptère.

Pour éviter les inconvénients et limitations apparaissant dans l'utilisation d'une telle dérive fixe de délestage, on peut mettre en oeuvre un volet de dérive, réglable en orientation, comme cela est par exemple décrit dans le brevet US-A-2 369 652. Un tel volet de dérive est commandé manuellement et on prévoit un système gyroscopique de commande des gaz du moteur du rotor principal, de façon à contrôler la puissance fournie par le moteur pour maintenir l'équilibrage en couple et pour éviter que les variations de puissance du moteur aient des effets trop rapides pour être suivis par les réajustements nécessaires des moyens anticouple.

On remarquera que le système anticouple de ce dernier brevet présente un inconvénient particulièrement important, car il subordonne la commande du rotor principal à celle de l'action anticouple. De plus, il est complexe, car il fait intervenir un système gyroscopique.

La présente invention a pour objet de remédier à ces inconvénients.

A cette fin, selon l'invention, l'hélicoptère comportant :

- un unique rotor principal d'avance et de sustentation ; et
- un système anticouple comprenant :

    . un rotor auxiliaire anticouple entraîné en rotation à partir des moyens moteurs dudit rotor principal et exerçant une poussée latérale anticouple commandable ; et
    . au moins une surface aérodynamique de direction, commandable en orientation et engendrant une portance transversale anticouple ;

est remarquable en ce qu'il comporte des moyens pour commander automatiquement l'angle de braquage de ladite surface aérodynamique de direction en fonction de l'angle de pas collectif dudit rotor principal et de la vitesse d'avance dudit hélicoptère.

La présente invention est basée sur le fait que l'angle de pas collectif dudit rotor principal est représentatif, pour une vitesse d'avance donnée, du couple exercé par ledit rotor principal et donc du couple de réaction sur le fuselage, qui doit être contrecarré par ledit système anticouple, tandis que la vitesse d'avance est représentative de la portance latérale fournie par ladite surface aérodynamique de direction. L'angle de pas collectif et la vitesse d'avance apparaissent donc comme des paramètres hautement représentatifs de l'équilibre en lacet dudit hélicoptère.

Selon le procédé de la présente invention :

- dans une phase préparatoire, on détermine et on mémorise une pluralité de groupes de trois valeurs, comprenant chacun une valeur de la vitesse d'avance dudit hélicoptère, une valeur de l'angle de pas collectif et une valeur de l'angle de braquage de ladite surface aérodynamique de direction, pour lesquelles la poussée latérale fournie par ledit rotor auxiliaire anticouple est au moins sensiblement nulle ; et
- en vol, on mesure la vitesse d'avance dudit hélicoptère et l'angle de pas collectif et on applique à ladite surface aérodynamique de direction un braquage dont la valeur est au moins approximativement égale à celle d'un desdits groupes de trois valeurs, dans lequel les valeurs mémorisées de la vitesse d'avance et de l'angle de pas collectif sont au moins approximativement égales aux valeurs mesurées correspondantes.

De préférence, dans ladite phase préparatoire, lesdits groupes de trois valeurs sont déterminés à partir des variations, à braquage constant de ladite surface aérodynamique de direction, de la poussée latérale dudit rotor auxiliaire anticouple en fonction de ladite vitesse d'avance et à partir des variations dudit angle de pas collectif en fonction, également, de ladite vitesse d'avance.

Pour exploiter les informations ainsi obtenues, on peut, avec la pluralité desdits groupes de trois valeurs, former une table à deux entrées et à une sortie, lesdites entrées étant respectivement une valeur de la vitesse d'avance et une valeur de l'angle de pas collectif, tandis que la sortie est une valeur de braquage de ladite surface aérodynamique de direction.

Cependant, de préférence, à partir de ladite pluralité desdits groupes de trois valeurs, on établit un modèle mathématique donnant le braquage de ladite surface aérodynamique de direction en fonction de la vitesse d'avance de l'hélicoptère et de l'angle de pas collectif dudit rotor principal.

La formule mathématique représentative dudit modèle peut être un polynôme, dont chaque monôme comporte le produit d'une puissance de la vitesse d'avance par une puissance dudit angle de pas collectif.

A des fins de simplification des calculs, on représente graphiquement ledit modèle mathématique, dans un système d'axes respectivement représentatifs de ladite vitesse d'avance et dudit braquage de la surface aérodynamique de direction, par un réseau de courbes dont chacune correspond à une valeur de l'angle de pas collectif, et chacune desdites courbes fait l'objet d'une approximation par des segments de droites dans des intervalles de valeurs de vitesse d'avance. L'angle de braquage peut alors être une fonction linéaire de l'angle de pas collectif et de la vitesse d'avance.

Lesdits moyens pour la commande automatique du braquage de ladite surface aérodynamique de direction peuvent être indépendants des moyens de commande de la poussée latérale anticouple exercée par ledit rotor auxiliaire anticouple. Cependant, il peut être avantageux, au contraire, que lesdits moyens pour la commande automatique du braquage de ladite surface aérodynamique de direction soient couplés avec des moyens pour la commande automatique de la poussée latérale anticouple exercée par ledit rotor auxiliaire anticouple, afin que la répartition de l'action anticouple globale puisse être optimisée.

Dans un mode de réalisation avantageux, lesdits moyens couplés pour la commande automatique du braquage de la surface aérodynamique de direction et de la poussée latérale anticouple exercée par ledit rotor auxiliaire anticouple reçoivent, en plus de la valeur de l'angle de pas collectif du rotor principal et de la vitesse d'avance, l'angle de pas réel du rotor auxiliaire anticouple, ainsi éventuellement que d'autres paramètres de vol comme la commande de direction, la vitesse angulaire de lacet, le facteur de charge latéral, la densité de l'air, le cap, l'assiette longitudinale ou l'angle de roulis.

Ainsi, il est possible d'actionner ladite surface aérodynamique de direction pour avoir une poussée nulle ou sensiblement nulle du rotor auxiliaire anticouple, tout en assurant l'équilibre en lacet de l'hélicoptère.

Une telle surface aérodynamique de direction peut être un volet de dérive, par exemple monté sur une dérive fixe prévue à l'arrière dudit hélicoptère. Elle peut également être constituée par une dérive, montée entièrement braquable, c'est-à-dire braquable dans sa totalité.

Bien entendu, le procédé conforme à l'invention peut être mis en oeuvre en commandant l'angle de braquage de plusieurs surfaces aérodynamiques de direction. On peut par exemple commander simultanément, de façon conforme à la présente invention, plusieurs volets de dérive et/ou plusieurs dérives entièrement braquables.

Par exemple, l'hélicoptère, éventuellement en plus d'un volet de dérive monté sur une dérive arrière fixe, comporte des dérives latérales susceptibles de délester ledit rotor auxiliaire anticouple et ces dérives latérales peuvent, soit être équipées de volets de dérive, soit être montées de façon entièrement braquable, lesdits volets de dérive et/ou lesdites dérives latérales étant commandés de façon analogue à ce qui a été décrit ci-dessus.

En variante, l'hélicoptère peut comporter une double dérive arrière dont chaque élément est, soit pourvu d'un volet de dérive commandé de la façon décrite ci-dessus, soit monté entièrement braquable et commandé conformément à l'invention.

Les figures du dessin annexé feront bien comprendre comment l'invention peut être réalisée. Sur ces figures, des références identiques désignent des éléments semblables.

La figure 1 est une vue latérale schématique d'un hélicoptère conforme à l'invention.

La figure 2 est une vue de dessus de l'hélicoptère de la figure 1.

La figure 3 est une coupe agrandie de la dérive arrière dudit hélicoptère, selon la ligne III-III de la figure 1.

La figure 4 explique schématiquement le principe de la présente invention.

La figure 5 montre le schéma synoptique d'un premier mode de réalisation des moyens de commande anticouple conforme à la présente invention.

La figure 6 est une illustration graphique de la loi du braquage du volet de dérive en fonction de la vitesse d'avance et de l'angle de pas collectif.

Les figures 7 et 8 montrent, respectivement en vue latérale et en vue de dessus, l'extrémité arrière à double dérive d'un hélicoptère conforme à la présente invention.

La figure 9 montre le schéma synoptique d'un second mode de réalisation des moyens de commande anticouple conforme à la présente invention.

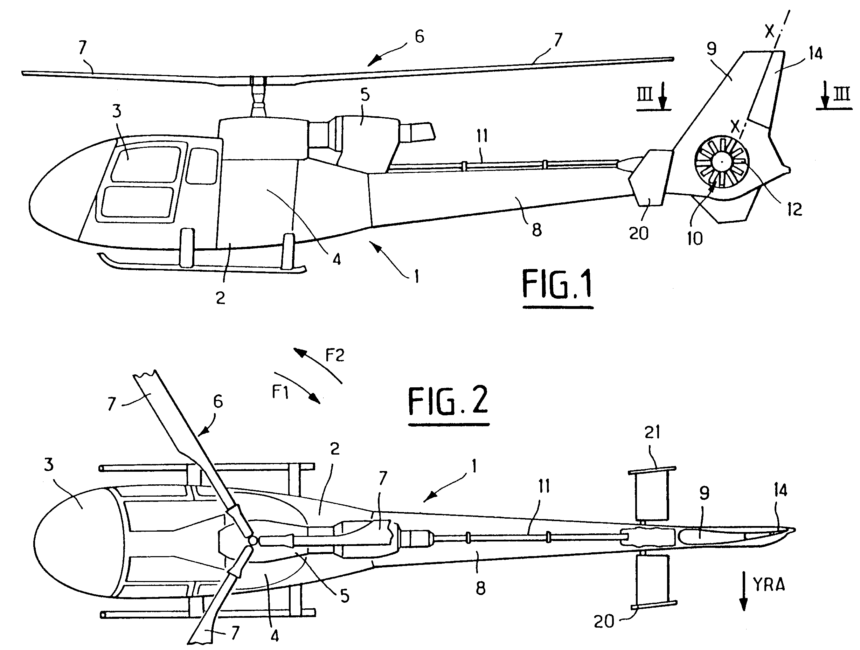

L'hélicoptère 1, montré schématiquement sur les figures 1 et 2, comporte un fuselage 2, dans la partie avant duquel est disposée la cabine de pilotage 3. La partie intermédiaire 4 dudit fuselage comporte un groupe moteur 5 susceptible d'entraîner en rotation un unique rotor principal d'avance et de sustentation 6, composé de pales 7. Le fuselage est prolongé vers l'arrière par une queue 8, à l'extrémité libre de laquelle est disposée une dérive 9. Par ailleurs, à l'extrémité arrière de la queue 8, par exemple à la base de la dérive 9, est prévu un rotor anticouple à pas variable 10, entraîné en rotation à partir du groupe moteur 5 par l'intermédiaire d'un arbre rotatif 11 et comportant des pales 12. De préférence, ledit rotor anticouple 10 est caréné, la carène étant constituée par la base de la dérive 9.

De façon connue, si le rotor principal 6 tourne dans le sens de la flèche F1 (figure 2), l'hélicoptère est entraîné en rotation dans le sens inverse F2, par réaction. Le rotor anticouple 10 a pour objet d'engendrer une poussée latérale YRA, contrecarrant la rotation du fuselage dans le sens F2 et dont l'amplitude est commandée par le pas des pales 12.

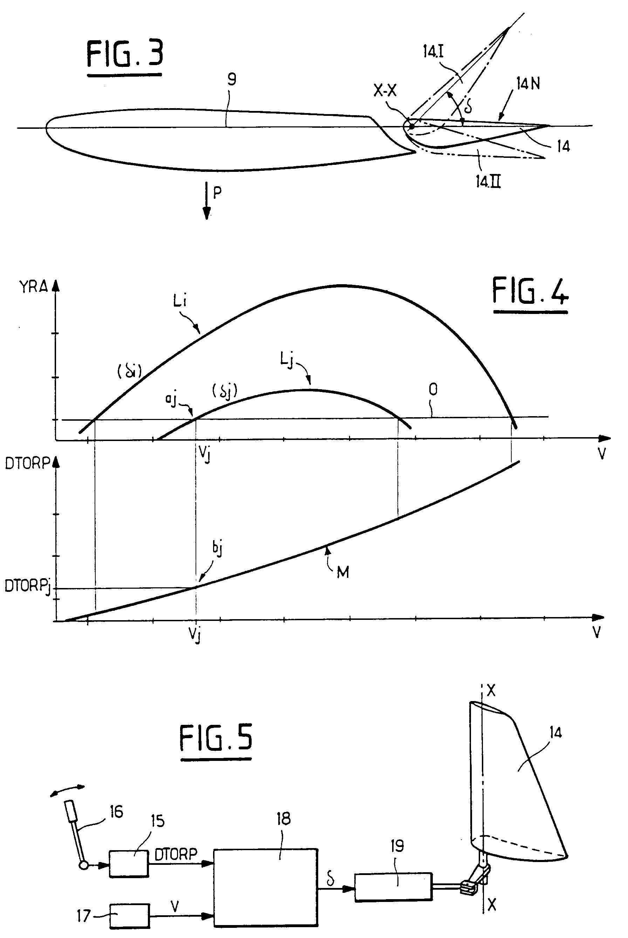

Pour aider le rotor anticouple 10 à combattre la rotation du fuselage dans le sens F2, la dérive 9 est profilée de façon à engendrer une portance latérale P, comme cela est représenté sur la figure 3.

De plus, du côté du bord de fuite de la dérive 9, celle-ci comporte un volet de dérive 14 orientable autour d'un axe de rotation X-X. Si, à partir de sa position neutre 14N, le volet de dérive 14 est braqué dans le sens F2 pour prendre une position 14.I, il augmente la portance latérale P. En revanche, si le volet de dérive 14 est braqué dans le sens F1 pour prendre une position 14.II, la portance latérale P diminue.

Selon l'invention, l'angle de braquage $\delta$ du volet de dérive 14 est une fonction de l'angle de pas collectif DTORP des pales 7 du rotor principal 6 et de la vitesse d'avance V de l'hélicoptère 1.

Sur la figure 4, on a tracé l'un au-dessous de l'autre, en correspondance, deux systèmes d'axes d'abscisses et d'ordonnées. Le premier de ces systèmes porte, en ordonnées, la poussée latérale YRA du rotor anticouple 10 et, en abscisses, la vitesse d'avance V de l'hélicoptère 1. Le second système d'axes porte, en ordonnées, l'angle de pas collectif DTORP du rotor principal 6 et, en abscisses, également la vitesse d'avance V de l'hélicoptère 1.

De façon expérimentale, par simulation ou par calcul, on trace :

- dans le premier système d'axes, pour chacune d'une pluralité de valeurs de l'angle de braquage $\delta$ du volet de dérive, une courbe donnant la variation de YRA en fonction de V. Ainsi, pour une valeur $\delta i$ de $\delta$, on obtient une courbe particulière Li de la famille de courbes, tandis que pour la valeur $\delta j$ de $\delta$, on obtient une autre courbe particulière Lj de ladite famille de courbes ;
- dans le second système d'axes, la courbe M représentative de la variation de l'angle de pas collectif DTORP en fonction de la vitesse d'avance V.

Bien entendu, l'utilisation optimale du volet de dérive 14 est obtenue, lorsque la poussée latérale YRA fournie par le rotor anticouple 10 est nulle. Pour une courbe Lj particulière, cette utilisation optimale correspond au point aj d'intersection de ladite courbe Lj par la droite 0, correspondant à YRA=0. Au point aj correspond une valeur Vj pour la vitesse V.

Par ailleurs, à chaque valeur Vj de la vitesse V, la courbe M fait correspondre une valeur DTORPj de l'angle de pas DTORP.

Ainsi, grâce aux courbes Lj et M, on peut déterminer un triplet de valeurs DTORPj, Vj, $\delta j$ pour lequel le braquage du volet de dérive 14 est optimal.

Bien entendu, puisqu'on utilise une pluralité de courbes Li, et non pas la seule courbe Lj, on détermine donc une pluralité de tels triplets.

On remarquera ainsi que, grâce à cette pluralité de triplets et par mesure de DTORP et de V, on peut déterminer la valeur optimale de $\delta$ correspondant aux valeurs mesurées de DTORP et de V. En effet, par un processus inverse de celui précédemment décrit, des valeurs mesurées DTORPj et Vj déterminent un point bj de la courbe M, auquel correspond le point aj de la courbe Lj et donc la valeur $\delta j$ de l'angle de braquage $\delta$.

Le dispositif illustré schématiquement sur la figure 5 permet de commander le braquage optimal du volet de dérive 14 autour de l'axe X-X. Ce dispositif comporte un capteur de position 15, associé au manche 16 de commande de pas collectif, à la disposition du pilote de l'hélicoptère, ainsi qu'un capteur 17 de la vitesse d'avance V de ce dernier. L'angle de pas collectif DTORP délivré par le capteur 15 et la vitesse V délivrée par le capteur 17 sont transmis à un calculateur 18 qui, à partir de ces deux mesures d'entrée, délivre la valeur $\delta$ du braquage à appliquer au volet de dérive 14. Cette valeur $\delta$ est fournie à un vérin 19, commandant la rotation dudit volet de dérive 14 autour de l'axe X-X. Le pas des pales 12 du rotor anticouple 10 peut donc être commandé pour que la poussée YRA soit nulle.

Le calculateur 18 peut comporter une table qui, à chaque couple de valeurs $DTORP_i$ et $V_i$ mesurées, fait correspondre la valeur optimale correspondante $\delta_i$, comme cela a été décrit ci-dessus. Dans ce cas, la fonction principale du calculateur 18 consiste donc, à la réception d'un couple de valeurs mesurées $DTORP_i$ et $V_i$, à rechercher dans ladite table la valeur $\delta_i$ correspondante et à l'adresser au vérin 19.

Cependant, en variante, il est possible, à partir de la pluralité des triplets $DTORP_i$, $V_i$ et $\delta_i$, de déterminer une fonction théorique des deux variables DTORP et V représentative de l'angle de braquage $\delta$, telle que $\delta = H(DTORP, V)$.

Dans ce cas, pour chaque couple de valeurs $DTORP_i$ et $V_i$ mesurées, le calculateur 18 calcule la valeur $\delta_i$ correspondante par l'équation $\delta_i = H(DTORP_i, V_i)$.

L'expérience et le calcul ont montré que la fonction H théorique présentait avantageusement une forme polynomiale du type :

$$\delta = H(DTORP, V) = k_1.DTORP^{n_1}.V^{m_1} + k_2.DTORP^{n_2}.V^{m_2} + ... + k_p.DTORP^{n_p}.V^{m_p}$$

dans laquelle

. $k_1, k_2, ..., k_p$ sont $\underline{p}$ coefficients numériques, chacun associé à l'un des $\underline{p}$ monômes de la fonction H ;
. $n_1, n_2, ..., n_p$ sont des exposants, entiers ou fractionnaires, respectivement associés à la variable DTORP desdits $\underline{p}$ monômes ; et
. $m_1, m_2, ..., m_p$ sont des exposants, entiers ou fractionnaires, respectivement associés à la variable V desdits $\underline{p}$ monômes.

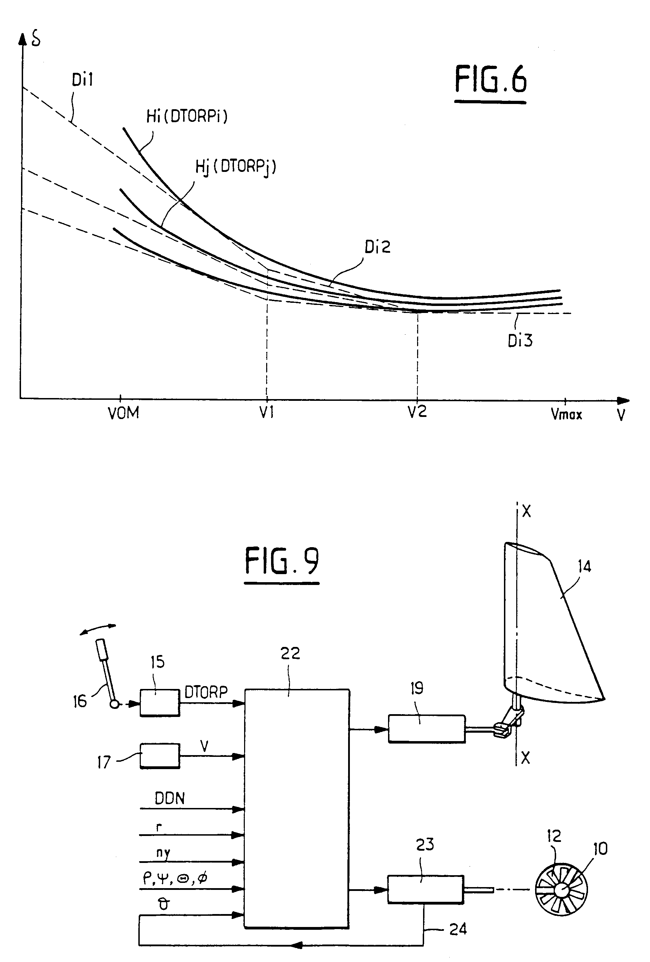

La fonction H(DTORP,V) peut être graphiquement représentée par le réseau des courbes Hi de la figure 6.

Sur cette figure, chaque courbe Hi représente l'évolution du braquage $\delta$ en fonction de la vitesse d'avance V, pour une valeur déterminée $DTORP_i$ du pas collectif DTORP.

Le réseau des courbes Hi représente donc la loi H(DTORP,V) permettant d'annuler la poussée latérale YRA du rotor anticouple 10.

Cette loi est relativement compliquée, mais elle peut être simplifiée. En effet, l'expérience montre qu'il existe, notamment dans le cas d'un rotor arrière caréné, autour de la valeur nulle de YRA, une zone dans laquelle la puissance WTT totale consommée par le rotor anticouple 10 (cette puissance totale WTT comportant la puissance réellement prélevée par le rotor anticouple 10 sur le groupe moteur 5 pour engendrer la poussée latérale YRA et la puissance nécessaire pour vaincre la traînée dudit rotor anticouple 10 et également fournie par le groupe moteur 5) est pratiquement constante, cette zone ayant tendance à s'élargir à grande vitesse V. Il en résulte donc qu'il n'est pas nécessaire d'annuler totalement la poussée latérale YRA du rotor anticouple 10, mais simplement de se rapprocher le plus possible de cette zone. Si l'on braquait le volet de dérive 14 au-delà de l'angle de braquage permettant d'atteindre cette zone, non seulement on ne gagnerait rien en puissance en ce qui concerne le rotor anticouple 10, mais encore on en ferait perdre à cause de la traînée supplémentaire dudit volet de dérive 14.

Par suite, les courbes Hi peuvent être approximées par des segments de droites (fonctions linéaires) dans des intervalles de vitesse. La figure 6 montre que chaque courbe Hi est approximée par un segment rectiligne Di1 entre la vitesse optimale de montée VOM et une valeur V1 de V, par un segment rectiligne Di2 entre là valeur V1 et une seconde valeur V2 et par un segment rectiligne Di3 entre la valeur V2 et la vitesse maximale du palier Vmax.

Dans ce cas simplifié, la fonction représentative de $\delta$, dans chacun des intervalles VOM-V1, V1-V2 et V2-Vmax, est donc une fonction linéaire de DTORP et de V, du type

$$\delta = A.DTORP + B.V$$

A et B étant des coefficients constants.

L'amplitude du braquage $\delta$ dans le sens positif (position 14I peut être de l'ordre de 30 à 45 degrés et, dans le sens négatif (position 14II), de l'ordre de -10 à -15 degrés. Les amplitudes de braquage externes sont limitées par des butées (non représentées). Bien entendu, le vérin 19 peut être électrique ou hydraulique.

Ainsi

- en vol en palier de l'hélicoptère 1 à des vitesses V comprises entre la vitesse de puissance minimale (VOM) et la vitesse maximale en palier (Vmax), le volet 14 peut assurer la quasi-totalité de l'effort anticouple et le rotor arrière 10 peut fonctionner pratiquement à poussée YRA nulle, d'où une minimisation de la puissance totale nécessaire au vol dans toute cette plage de vitesse. On peut en effet montrer que la puissance consommée par la traînée induite du volet 14 est largement inférieure à celle qui serait nécessaire pour obtenir le même équilibre en modulant uniquement la poussée YRA du rotor arrière ;

- en vol de montée :

  . à grande vitesse horizontale V, l'action du volet 14 (en une position 14.I) peut être suffisamment efficace pour continuer d'assurer un délestage quasi-complet du rotor arrière 10 pour toutes les vitesses verticales possibles avec la motorisation installée ;
  . pour des vitesses horizontales V voisines de la vitesse optimale de montée VOM, le volet 14 arrive rapidement en butée dans le sens positif dès lors que la vitesse verticale est positive. Le délestage n'est donc que partiel et de moins en moins important en valeur relative au fur et à mesure que la vitesse verticale augmente. Il n'en demeure pas moins que l'effet du volet 14 sur la puissance totale nécessaire en montée reste avantageux, ce qui procure un gain significatif en vitesse verticale pour un niveau de puissance donné pouvant se traduire par un gain de masse décollable, lorsque la condition critique est le taux de montée sur un moteur ;

- en vol de descente et en autorotation, la réduction automatique de la portance de la dérive par l'effet du volet (en une position 14.II) évite d'avoir à engendrer une poussée négative YRA à l'aide du rotor anticouple 10. Ceci augmente la marge de commande disponible sur le palonnier et permet également, dans une certaine mesure, de limiter la plage de pas négatif du rotor anticouple. Le fait de ne pas avoir à engendrer de poussée négative par le rotor arrière en autorotation augmente la finesse de plané de l'hélicoptère dans cette phase de vol.

On voit donc que, grâce à l'invention, on obtient des gains de performances, notamment en ce qui concerne :

- la vitesse verticale de montée à la vitesse optimale de montée VOM ;
- la vitesse maximale en palier Vmax ;
- la masse décollable.

En ce qui concerne la vitesse d'avance mesurée V, il est avantageux d'utiliser la vitesse indiquée (indicated air speed), puisque cette vitesse indiquée est généralement mesurée à bord des hélicoptères. En effet, la vitesse VTAS (true air speed), qui est la vitesse réelle de l'hélicoptère par rapport à l'air, n'est généralement pas mesurée. On sait toutefois que la vitesse VTAS et la vitesse indiquée sont liées par l'intermédiaire de la densité de l'air.

Le volet de dérive 14 peut être de tout type connu. Ce peut être un volet simple (plain flap) ou un volet à fente (slotted flap). Un volet à fente est intéressant pour obtenir de forts délestages du rotor anticouple 10 en vol de montée à la vitesse optimale VOM.

Comme cela est représenté sur les figures 1 et 2, l'hélicoptère 1 peut comporter des dérives latérales 20 et 21, apportant une contribution aérodynamique supplémentaire, favorable au délestage du rotor anticouple 10. Chacune des dérives latérales 20 et 21 peut être pourvue, du côté de son bord de fuite, d'un volet de dérive semblable au volet 14 et commandé en braquage de manière semblable. En variante, lesdites dérives latérales 20 et 21 pourraient être entièrement braquables et être commandées en braquage comme indiqué ci-dessus.

Dans le cas où les dérives latérales 20 et 21 sont prévues, il serait éventuellement possible de ne pas prévoir la dérive centrale arrière 9 décrite ci-dessous.

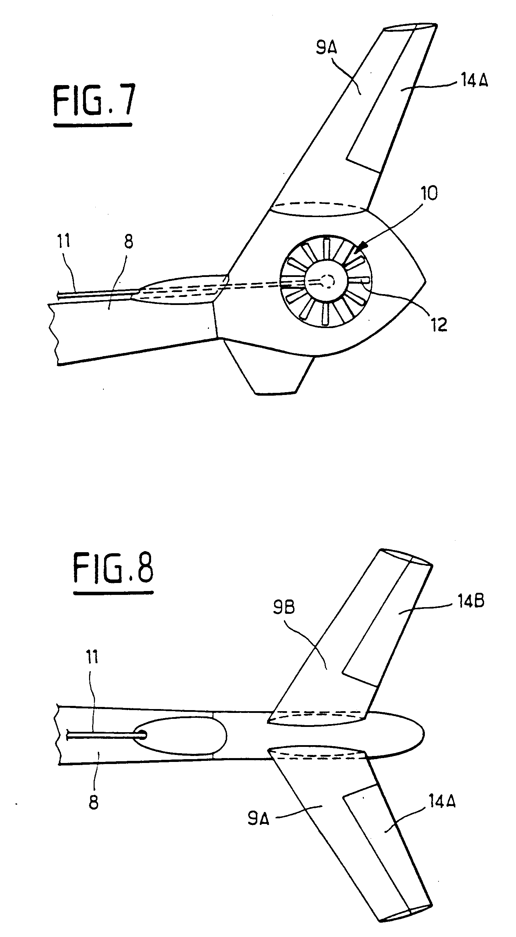

Dans la variante de réalisation des figures 7 et 8, la dérive verticale arrière 9 des figures 1 et 2, est remplacée par deux dérives obliques 9A et 9B. Comme on peut le voir, chaque dérive oblique 9A et 9B est pourvue, du côté de son bord de fuite, d'un volet de dérive 14A ou 14B, commandé en braquage de façon semblable à ce qui vient d'être décrit ci-dessus pour le volet 14. En variante, chaque dérive oblique 9A et 9B pourrait être montée entièrement braquable et commandée conformément à la présente invention.

On remarquera que le dispositif de la figure 5 est particulièrement simple, mais qu'il ne peut prendre en compte des paramètres non mesurables, ou difficilement mesurables, tels que la masse de l'hélicoptère 1, la densité de l'air ou le dérapage dudit hélicoptère. Or, ces paramètres ont une influence sur l'angle de pas collectif DTORP. Aussi, le dispositif de la figure 5 risque d'avoir une action qui n'est pas toujours optimale.

Pour perfectionner le dispositif de la figure 5, le dispositif de la figure 9 comporte, à la place du calculateur 18 de braquage du volet 14, un calculateur 22 de pilotage de l'hélicoptère 1 en lacet.

Le calculateur 22, outre l'angle de pas collectif DTORP et la vitesse d'avance V, reçoit :

- la commande de direction DDN provenant du palonnier à la disposition du pilote, par l'intermédiaire d'un capteur de position de palonnier (non représenté) ;

- la vitesse angulaire de lacet r, et éventuellement les vitesses angulaires de roulis et de tangage ;
- le facteur de charge latéral ny ;
- la densité de l'air $\rho$, le cap $\psi$, l'assiette longitudinale $\Theta$, et l'angle de roulis $\Phi$.

Ces différentes informations d'entrée sont mesurées et calculées de façon habituelle et connue à bord des hélicoptères.

De plus, outre le vérin 19 du volet de dérive 14, le calculateur de pilotage en lacet 22 commande un vérin 23, qui lui-même commande le pas $\theta$ des pales (et donc la poussée YRA) du rotor anticouple 10. Une liaison de retour 24 permet d'introduire le pas $\theta$ des pales 12 dans le calculateur 22, au même titre que les informations DTORP, V, DDN, r, ny, $\rho$, $\psi$, $\Theta$ et $\Phi$.

Ainsi, le dispositif de la figure 9 fonctionne en boucle fermée et permet d'éliminer l'influence des paramètres non mesurables, rappelés ci-dessus. En effet, le dispositif de la figure 9 permet d'optimiser la répartition de l'action anticouple entre le volet de dérive 14 et le rotor anticouple 10 en ramenant le pas $\theta$ des pales 12 à une valeur de référence et en conservant l'équilibre latéral de l'hélicoptère 1. Ce dispositif, à partir de la mesure du pas réel $\theta$ appliqué au rotor anticouple 10, actionne le volet de dérive 14, selon une loi du type auto-trim, jusqu'à ce que l'équilibre en lacet soit obtenu avec le pas du rotor anticouple fournissant une poussée nulle ou sensiblement nulle. On remarquera qu'avec un rotor anticouple caréné, ce pas est quasiment indépendant de la vitesse.

En fonction de l'architecture des commandes de vol (mécaniques, électriques) et de la présence (ou de l'absence) d'un système de pilotage automatique, la structure pratique des dispositifs des figures 5 et 9 peut prendre de nombreuses formes.

Par ailleurs, par le choix des actionneurs 19 et 23, il est possible d'obtenir des dispositifs de commande à dynamique lente ou rapide. Des dispositifs à dynamique rapide peuvent permettre d'améliorer la stabilité en lacet et la manoeuvrabilité de l'hélicoptère 1.

De ce qui précède, on comprendra aisément que le volet 14 des figures 5 et 9 peut être remplacé par une dérive 9, 20, 21 sans volet de dérive qui serait rendue entièrement braquable. De même, bien qu'un seul volet 14 ait été représenté sur ces figures 5 et 9, il va de soi que plusieurs volets 14 (ou plusieurs dérives entièrement braquables) peuvent être commandés simultanément par les moyens de commande 18 et 22.

## Revendications

1. Hélicoptère (1) comportant :

   - un unique rotor principal (6) d'avance et de sustentation ; et
   - un système anticouple comprenant :

     . un rotor auxiliaire anticouple (10) entraîné en rotation à partir des moyens moteurs (5) dudit rotor principal (6) et exerçant une poussée latérale anticouple commandable (YRA) ; et
     . au moins une surface aérodynamique de direction (14, 14A, 14B), commandable en orientation et engendrant une portance transversale anticouple ;

   caractérisé en ce qu'il comporte des moyens (18, 19, 22) pour commander automatiquement l'angle de braquage de ladite surface aérodynamique de direction (14, 14A, 14B) en fonction de l'angle de pas collectif (DTORP) dudit rotor principal (6) et de la vitesse d'avance (V) dudit hélicoptère (1).

2. Hélicoptère (1) selon la revendication 1,
   caractérisé en ce que lesdits moyens (18, 19) pour la commande automatique du braquage de ladite surface aérodynamique de direction (14) sont indépendants des moyens de commande (23) de la poussée latérale (YRA) anticouple exercée par ledit rotor auxiliaire anticouple (10).

3. Hélicoptère (1) selon la revendication 1,
   caractérisé en ce que lesdits moyens (22, 19) pour la commande automatique du braquage de ladite surface aérodynamique de direction (14) sont couplés avec des moyens (22, 23) pour la commande automatique de la poussée latérale (YRA) anticouple exercée par ledit rotor auxiliaire anticouple (10).

4. Hélicoptère (1) selon la revendication 3,
   caractérisé en ce que lesdits moyens de commande couplés (22, 19, 23) reçoivent l'angle de pas réel ($\theta$) du rotor auxiliaire anticouple (10).

5. Hélicoptère (1) selon la revendication 4,
caractérisé en ce que lesdits moyens couplés (22, 19, 23) pour la commande automatique du braquage de ladite surface aérodynamique de direction (14) et de la poussée latérale anticouple (YRA) exercée par ledit rotor auxiliaire anticouple reçoivent, en plus de la valeur de l'angle de pas collectif du rotor principal, de la vitesse d'avance et de l'angle de pas réel du rotor auxiliaire anticouple, d'autres paramètres de vol comme la commande de direction (DDN), la vitesse angulaire de lacet (r), le facteur de charge latéral (ny), la densité de l'air ($\rho$), le cap ($\psi$), l'assiette longitudinale ($\Theta$) ou l'angle de roulis ($\Phi$).

6. Hélicoptère (1) selon l'une quelconque des revendications 1 à 5,
caractérisé en ce que ladite surface aérodynamique de direction est un volet de dérive.

7. Hélicoptère (1) selon l'une quelconque des revendications 1 à 5,
caractérisé en ce que ladite surface aérodynamique de direction est une dérive entièrement braquable.

8. Hélicoptère (1) selon l'une quelconque des revendications 1 à 7,
caractérisé en ce qu'il comprend plusieurs surfaces aérodynamiques de direction commandées par lesdits moyens (18, 19, 22) de commande automatique de l'angle de braquage.

9. Hélicoptère selon l'une quelconque des revendications 1 à 8,
caractérisé en ce qu'il comporte des dérives latérales (20, 21) susceptibles de délester ledit rotor auxiliaire anticouple.

10. Hélicoptère (1) selon la revendication 9,
caractérisé en ce que lesdites dérives latérales (20, 21) sont équipées de volets de dérive, commandés par lesdits moyens (18, 19, 22) de commande automatique de braquage.

11. Hélicoptère (1) selon la revendication 9,
caractérisé en ce que lesdites dérives latérales (20, 21) sont montées entièrement braquables et sont commandées par lesdits moyens (18, 19, 22) de commande automatique de l'angle de braquage.

12. Hélicoptère (1) selon l'une quelconque des revendications 1 à 11,
caractérisé en ce qu'il comporte une double dérive arrière (9A, 9B), dont chaque élément (9A ou 9B) est pourvu d'un volet de dérive (14A ou 14B), commandé par lesdits moyens (18, 19, 22) de commande automatique de l'angle de braquage.

13. Hélicoptère (1) selon l'une quelconque des revendications 1 à 11,
caractérisé en ce qu'il comporte une double dérive arrière (9A, 9B) dont chaque élément (9A ou 9B) est monté entièrement braquable et est commandé par lesdits moyens (18, 19, 22) de commande automatique de l'angle de braquage.

14. Procédé pour contrecarrer le couple exercé par un unique rotor principal (6) d'avance et de sustentation sur un hélicoptère (1) comportant un système anticouple comprenant :

- un rotor auxiliaire anticouple (10) entraîné en rotation à partir des moyens moteurs (5) dudit rotor principal (6) et exerçant une poussée latérale anticouple commandable (YRA) ; et
- au moins une surface aérodynamique de direction (14, 14A, 14B), commandable en orientation et engendrant une portance transversale anticouple ;

caractérisé en ce que :

- dans une phase préparatoire, on détermine et on mémorise une pluralité de groupes de trois valeurs, comprenant chacun une valeur ($V_j$) de la vitesse d'avance (V) dudit hélicoptère, une valeur ($DTORP_j$) de l'angle de pas collectif (DTORP) et une valeur ($\delta_j$) de l'angle de braquage ($\delta$) de ladite surface aérodynamique de direction, pour lesquelles la poussée latérale (YRA) fournie par ledit rotor auxiliaire anticouple (10) est au moins sensiblement nulle ; et
- en vol, on mesure la vitesse d'avance dudit hélicoptère et l'angle de pas collectif et on applique à ladite surface aérodynamique de direction un braquage dont la valeur est au moins approximativement égale à celle d'un desdits groupes de trois valeurs, dans lequel les valeurs mémorisées de la vitesse d'avance et de l'angle de pas collectif sont au moins approximativement égales aux valeurs mesurées correspondantes.

**15.** Procédé selon la revendication 14,
caractérisé en ce que, dans ladite phase préparatoire, lesdits groupes de trois valeurs sont déterminés à partir des variations, à braquage constant de ladite surface aérodynamique de direction, de la poussée latérale (YRA) dudit rotor auxiliaire anticouple en fonction de ladite vitesse d'avance et à partir des variations dudit angle de pas collectif en fonction de ladite vitesse d'avance.

**16.** Procédé selon l'une des revendications 14 ou 15,
caractérisé en ce que, avec la pluralité desdits groupes de trois valeurs, on forme une table à deux entrées et à une sortie, lesdites entrées étant respectivement une valeur de la vitesse d'avance et une valeur de l'angle de pas collectif, tandis que la sortie est une valeur du braquage de ladite surface aérodynamique de direction.

**17.** Procédé selon l'une des revendications 14 ou 15,
caractérisé en ce que, à partir de ladite pluralité desdits groupes de trois valeurs, on établit un modèle mathématique donnant le braquage de ladite surface aérodynamique de direction en fonction de la vitesse d'avance de l'hélicoptère et de l'angle de pas collectif dudit rotor principal.

**18.** Procédé selon la revendication 17,
caractérisé en ce que ladite formule mathématique représentative dudit modèle est un polynôme, dont chaque monôme comporte le produit d'une puissance de ladite vitesse d'avance par une puissance dudit angle de pas collectif.

**19.** Procédé selon la revendication 18,
caractérisé en ce que ledit modèle mathématique est représenté graphiquement, dans un système d'axes respectivement représentatifs de ladite vitesse d'avance et dudit braquage de ladite surface aérodynamique de direction, par un réseau de courbes dont chacune correspond à une valeur de l'angle de pas collectif, et en ce que chacune desdites courbes (Hi(DTORPi)) fait l'objet d'une approximation par des segments de droites (Di1, Di2, Di3) dans des intervalles de valeurs de vitesse d'avance.

**20.** Procédé selon la revendication 19,
caractérisé en ce que, dans chacun desdits intervalles de valeurs de vitesse d'avance, l'angle de braquage de ladite surface aérodynamique de direction est une fonction linéaire de l'angle de pas collectif et de la vitesse d'avance.

## Claims

**1.** Helicopter (1) including:

- a single main rotor (6) for forward motion and for lift; and
- an anti-torque system comprising:

  . an anti-torque auxiliary rotor (10) driven in rotation from the motor means (5) of the said main rotor (6) and exerting a controllable anti-torque lateral thrust (YRA); and
  . at least one aerodynamic steering surface (14, 14A, 14B), controllable in orientation and generating an anti-torque transverse lift;

characterized in that it includes means (18, 19, 22) for automatically controlling the deflection angle of the said aerodynamic steering surface (14, 14A, 14B) as a function of the collective pitch angle (DTORP) of the said main rotor (6) and of the forward speed (V) of the said helicopter (1).

**2.** Helicopter (1) according to Claim 1, characterized in that the said means (18, 19) for automatic control of the deflection of the said aerodynamic steering surface (14) are independent of the means (23) of control of the anti-torque lateral thrust (YRA) exerted by the said anti-torque auxiliary rotor (10).

**3.** Helicopter (1) according to Claim 1, characterized in that the said means (22, 19) for automatic control of the deflection of the said aerodynamic steering surface (14) are coupled with means (22, 23) for automatic control of the anti-torque lateral thrust (YRA) exerted by the said anti-torque auxiliary rotor (10).

**4.** Helicopter (1) according to Claim 3, characterized in that the said coupled control means (22, 19, 23) receive the actual pitch angle ($\theta$) of the anti-torque auxiliary rotor (10).

5. Helicopter (1) according to Claim 4, characterized in that the said coupled means (22, 19, 23) for automatic control of the deflection of the said aerodynamic steering surface (14) and of the anti-torque lateral thrust (YRA) exerted by the said anti-torque auxiliary rotor receive, in addition to the value of the collective pitch angle of the main rotor, of the forward speed and of the actual pitch angle of the anti-torque auxiliary rotor, other flight parameters such as the steering command (DDN), the yaw angular speed (r), the lateral load factor (ny), the density of the air ($\rho$), the heading ($\psi$), the longitudinal attitude ($\Theta$) or the roll angle ($\Phi$).

6. Helicopter (1) according to any one of Claims 1 to 5, characterized in that the said aerodynamic steering surface is a fin flap.

7. Helicopter (1) according to any one of Claims 1 to 5, characterized in that the said aerodynamic steering surface is an all-moving fin.

8. Helicopter (1) according to any one of Claims 1 to 7, characterized in that it comprises several aerodynamic steering surfaces controlled by the said means (18, 19, 22) of automatic control of the deflection angle.

9. Helicopter according to any one of Claims 1 to 8, characterized in that it includes lateral fins (20, 21) capable of reducing the load on the said anti-torque auxiliary rotor.

10. Helicopter (1) according to Claim 9, characterized in that the said lateral fins (20, 21) are equipped with fin flaps, controlled by the said means (18, 19, 22) of automatic deflection control.

11. Helicopter (1) according to Claim 9, characterized in that the said lateral fins (20, 21) are mounted so as to be all-moving, and are controlled by the said means (18, 19, 22) of automatic control of the deflection angle.

12. Helicopter (1) according to any one of Claims 1 to 11, characterized in that it includes a double rear fin (9A, 9B), each element (9A or 9B) of which is provided with a fin flap (14A or 14B), controlled by the said means (18, 19, 22) of automatic control of the deflection angle.

13. Helicopter (1) according to any one of Claims 1 to 11, characterized in that it includes a double rear fin (9A, 9B), each element (9A or 9B) of which is mounted so as to be all moving and is controlled by the said means (18, 19, 22) of automatic control of the deflection angle.

14. Method for counteracting the torque exerted by a single main rotor (6) for forward motion and for lift on a helicopter (1) including an anti-torque system comprising:

    - an anti-torque auxiliary rotor (10) driven in rotation from the motor means (5) of the said main rotor (6) and exerting a controllable anti-torque lateral thrust (YRA); and
    - at least one aerodynamic steering surface (14, 14A, 14B), controllable in orientation and generating an anti-torque transverse lift;

    characterized in that:

    - in a preparatory phase, a plurality of groups of three values are determined and stored in memory, each comprising a value (Vj) of the forward speed (V) of the said helicopter, a value (DTORPj) of the collective pitch angle (DTORP) and a value ($\delta$j) of the deflection angle ($\delta$) of the said aerodynamic steering surface, for which the lateral thrust (YRA) supplied by the said anti-torque auxiliary rotor (10) is at least substantially zero; and
    - in flight, the forward speed of the said helicopter and the collective pitch angle are measured, and a deflection is applied to the said aerodynamic steering surface, the value of which is at least approximately equal to that of one of the said groups of three values, in which the memory-stored values of the forward speed and of the collective pitch angle are at least approximately equal to the corresponding measured values.

15. Method according to Claim 14, characterized in that, in the said preparatory phase, the said groups of three values are determined on the basis of variations, with constant deflection of the said aerodynamic steering surface, of the lateral thrust (YRA) of the said anti-torque auxiliary rotor as a function of the said forward speed and on the basis of variations in the said collective pitch angle as a function of the said forward speed.

16. Method according to one of Claims 14 or 15, characterized in that, with the plurality of the said groups of three values, a table having two inputs and one output is formed, the said inputs being respectively a value of the forward speed and a value of the collective pitch angle, while the output is a value of the deflection of the said aerodynamic steering surface.

17. Method according to one of Claims 14 or 15, characterized in that, on the basis of the said plurality of the said groups of three values, a mathematical model is established giving the deflection of the said aerodynamic steering surface as a function of the forward speed of the helicopter and of the collective pitch angle of the said main rotor.

18. Method according to Claim 17, characterized in that the said mathematical formula representative of the said model is a polynomial, each term of which includes the product of a power of the said forward speed and a power of the said collective pitch angle.

19. Method according to Claim 18, characterized in that the said mathematical model is represented graphically, in an axis system representative respectively of the said forward speed and of the said deflection of the said aerodynamic steering surface, by an array of curves, each of which corresponds to one value of the collective pitch angle, and in that each of the said curves (Hi(DTORPi)) is the subject of an approximation by straight-line segments (Di1, Di2, Di3) in intervals of values of forward speed.

20. Method according to Claim 19, characterized in that, in each of the said intervals of values of forward speed, the deflection angle of the said aerodynamic steering surface is a linear function of the collective pitch angle and of the forward speed.

## Patentansprüche

1. Hubschrauber (1) mit:

   - einem einzigen Hauptrotor (6) für die Vorwärtsbewegung und den Auftrieb; und
   - einem Gegenmomentsystem, welches umfaßt:

     • einen Gegenmoment-Hilfsrotor (10), der von Motormitteln (5) des Hauptrotors (6) ausgehend drehangetrieben ist und einen steuerbaren Gegenmoment-Seitenschub (YRA) ausübt; und
     • wenigstens eine aerodynamische Leitfläche (14, 14A, 14B), die in ihrer Orientierung steuerbar ist und einen seitlichen Gegenmomentauftrieb erzeugt;

   dadurch gekennzeichnet, daß er Mittel (18, 19, 22) zum automatischen Steuern des Ausschlagwinkels der aerodynamischen Leitfläche (14, 14A, 14B) als Funktion des gemeinsamen Blattwinkels (DTORP) des Hauptrotors (6) und der Vorwärtsgeschwindigkeit (V) des Hubschraubers besitzt.

2. Hubschrauber (1) nach Anspruch 1, dadurch gekennzeichnet, daß die Mittel (18, 19) zur automatischen Steuerung des Ausschlags der aerodynamischen Leitfläche (14) von den Steuerungsmitteln (23) für den Gegenmoment-Seitenschub (YRA) unabhängig sind, der von dem Gegenmoment-Hilfsrotor (10) ausgeübt wird.

3. Hubschrauber (1) nach Anspruch 1, dadurch gekennzeichnet, daß die Mittel (22, 19) zur automatischen Steuerung des Ausschlags der aerodynamischen Leitfläche (14) an die Mitteln (23) zur automatischen Steuerung des Gegenmoment-Seitenschubs (YRA) gekoppelt sind, der von dem Gegenmoment-Hilfsrotor (10) ausgeübt wird.

4. Hubschrauber (1) nach Anspruch 3, dadurch gekennzeichnet, daß die gekoppelten Steuerungsmittel (22, 19, 23) den effektiven Blattwinkel ($\theta$) des Gegenmoment-Hilfsrotors (10) empfangen.

5. Hubschrauber (1) nach Anspruch 4, dadurch gekennzeichnet, daß die gekoppelten Mittel (22, 19, 23) zur automatischen Steuerung des Ausschlags der aerodynamischen Leitfläche (14) und des Gegenmoment-Seitenschubs (YRA), der von dem Gegenmoment-Hilfsrotor ausgeübt wird, zusätzlich zum Wert des gemeinsamen Blattwinkels des Hauptrotors, der Vorwärtsgeschwindigkeit und des effektiven Blattwinkels des Gegenmoment-Hilfsrotors, weitere Flugparameter empfangen, wie den Lenkbefehl (DDN), die Gierwinkelgeschwindigkeit (r), den Seitenlastfaktor (ny), die Dichte der Luft ($\rho$), den Kurs ($\psi$), den Trimmwinkel ($\Theta$) und den Rollwinkel ($\Phi$).

6. Hubschrauber (1) nach einem der Ansprüche 1 bis 5, dadurch gekennzeichnet, daß die aerodynamische Leitfläche eine Seitenleitwerksklappe ist.

7. Hubschrauber (1) nach einem der Ansprüche 1 bis 5, dadurch gekennzeichnet, daß die aerodynamische Leitfläche ein vollständig schwenkbares Seitenleitwerk ist.

8. Hubschrauber (1) nach einem der Ansprüche 1 bis 7, dadurch gekennzeichnet, daß er mehrere aerodynamische Leitflächen umfaßt, die von den Mitteln (18, 19, 22) zur automatischen Steuerung des Ausschlagwinkels gesteuert werden.

9. Hubschrauber (1) nach einem der Ansprüche 1 bis 8, dadurch gekennzeichnet, daß er seitliche Seitenleitwerke (20, 21) umfaßt, die geeignet sind, den Gegenmoment-Hilfsrotor zu entlasten.

10. Hubschrauber (1) nach Anspruch 9, dadurch gekennzeichnet, daß die seitlichen Seitenleitwerke (20, 21) mit Seitenleitwerksklappen ausgerüstet sind, die von den Mitteln (18, 19, 22) zur automatischen Steuerung des Ausschlags gesteuert werden.

11. Hubschrauber (1) nach Anspruch 9, dadurch gekennzeichnet, daß die seitlichen Seitenleitwerke (20, 21) vollständig schwenkbar angebracht sind und von den Mitteln (18, 19, 22) zur automatischen Steuerung des Ausschlagwinkels gesteuert werden.

12. Hubschrauber (1) nach einem der Ansprüche 1 bis 11, dadurch gekennzeichnet, daß er ein hinteres Doppel-Seitenleitwerk (9A, 9B) umfaßt, dessen jeweiliges Element (9A oder 9B) mit einer Seitenleitwerksklappe (14A oder 14B) versehen ist, die von den Mitteln (18, 19, 22) zur automatischen Steuerung des Ausschlagwinkels gesteuert wird.

13. Hubschrauber (1) nach einem der Ansprüche 1 bis 11, dadurch gekennzeichnet, daß er ein hinteres Doppel-Seitenleitwerk (9A, 9B) umfaßt, dessen jeweiliges Element (9A oder 9B) vollständig schwenkbar angebracht ist und von den Mitteln (18, 19, 22) zur automatischen Steuerung des Ausschlagwinkels gesteuert wird.

14. Verfahren, dem Drehmoment entgegenzuwirken, das von einem einzelnen Hauptrotor (6) für die Vorwärtsbewegung und den Auftrieb auf einen Hubschrauber (1) ausgeübt wird, der ein Gegenmomentsystem besitzt, welches umfaßt:

   - einen Gegenmoment-Hilfsrotor (10), der von Motormitteln (5) des Hauptrotors (6) ausgehend drehangetrieben ist und einen steuerbaren Gegenmoment-Seitenschub (YRA) ausübt; und
   - wenigstens eine aerodynamische Leitfläche (14, 14A, 14B), die in ihrer Orientierung steuerbar ist und einen seitlichen Gegenmomentauftrieb erzeugt;

   dadurch gekennzeichnet, daß:

   - in einer Vorbereitungsphase eine Vielzahl von Gruppen von drei Werten ermittelt und gespeichert werden, die jeweils einen Wert (Vj) der Vorwärtsgeschwindigkeit (V) des Hubschraubers, einen Wert (DTORPj) des gemeinsamen Blattwinkels (DTROP) und einen Wert ($\delta$j) des Ausschlagwinkels ($\delta$) der aerodynamischen Leitfläche umfaßt, für welche der vom Gegenmoment-Hilfsrotor (10) gelieferte Seitenschub (YRA) wenigstens im wesentlichen Null ist; und
   - im Flug die Vorwärtsgeschwindigkeit des Hubschraubers und der gemeinsame Blattwinkel gemessen wird und bei der aerodynamischen Leitfläche ein Ausschlag verwendet wird, dessen Wert wenigstens annähernd gleich demjenigen aus einer der Gruppen von drei Werten ist, in welcher die gespeicherten Werte der Vorwärtsgeschwindigkeit und des gemeinsamen Blattwinkels wenigstens annähernd gleich den entsprechenden gemessenen Werten sind.

15. Verfahren nach Anspruch 14, dadurch gekennzeichnet, daß in der Vorbereitungsphase die Gruppen von drei Werten bei konstantem Ausschlag der aerodynamischen Leitfläche anhand von Variationen des Seitenschubs (YRA) des Gegenmoment-Hilfsrotors als Funktion der Vorwärtsgeschwindigkeit und anhand von Variationen des gemeinsamen Blattwinkels als Funktion der Vorwärtsgeschwindigkeit bestimmt werden.

16. Verfahren nach einem der Ansprüche 14 oder 15, dadurch gekennzeichnet, daß mit der Vielzahl der Gruppen von drei Werten eine Tabelle mit zwei Eingaben und einer Ausgabe gebildet wird, wobei die Eingaben jeweils ein Wert der Vorwärtsgeschwindigkeit und ein Wert des gemeinsamen Blattwinkels sind, während die Ausgabe ein Wert des Ausschlags der aerodynamischen Leitfläche ist.

17. Verfahren nach einem der Ansprüche 14 oder 15, dadurch gekennzeichnet, daß ausgehend von der Vielzahl der Gruppen von drei Werten ein mathematisches Modell aufgestellt wird, das den Ausschlag der aerodynamisch wirk-

**EP 0 566 452 B1**

samen Leitfläche als Funktion der Vorwärtsgeschwindigkeit des Hubschraubers und des gemeinsamen Blattwinkels des Hauptrotors liefert.

18. Verfahren nach Anspruch 17, dadurch gekennzeichnet, daß die das Modell darstellende mathematische Formel ein Polynom ist, dessen Monome jeweils das Produkt einer Potenz der Vorwärtsgeschwindigkeit und einer Potenz des gemeinsamen Blattwinkels beinhaltet.

19. Verfahren nach Anspruch 18, dadurch gekennzeichnet, daß das mathematische Modell in einem System mit Achsen, die jeweils die Vorwärtsgeschwindigkeit und den Ausschlag der aerodynamischen Leitfläche darstellen, durch eine Schar von Kurven graphisch dargestellt wird, von denen jede einem Wert des gemeinsamen Blattwinkels entspricht, und dadurch, daß jede der Kurven (Hi(DTORPi)) Gegenstand einer Annäherung durch Geradenabschnitte (Di1, Di2, Di3) in Intervallen von Werten der Vorwärtsgeschwindigkeit ist.

20. Verfahren nach Anspruch 19, dadurch gekennzeichnet, daß in jedem der Intervalle von Werten der Vorwärtsgeschwindigkeit der Ausschlagwinkel der aerodynamischen Leitfläche eine lineare Funktion des gemeinsamen Blattwinkels und der Vorwärtsgeschwindigkeit ist.

13

FIG.1

FIG.2

EP 0 566 452 B1

FIG.3

FIG.4

FIG.5

FIG.6

FIG.9

FIG.7

FIG.8